# EUROPEAN PATENT APPLICATION

(11) **EP 1 911 720 A1**
(43) Date of publication of application: **16.04.2008**
(21) Application number: 06782171.0
(22) Date of filing: 02.08.2006
(51) Int. Cl.: C01B 3/06, H01M 8/06

(54) **HYDROGEN GENERATION APPARATUS AND FUEL CELL SYSTEM**

(30) Priority: 03.08.2005 JP 2005225629; 28.12.2005 JP 2005379756
(71) Applicant: Seiko Instruments Inc., Chiba-shi, Chiba 261-8507 (JP)
(72) Inventor: SARATA, Takafumi, c/o SEIKO INSTRUMENTS INC., Chiba-shi, Chiba 261-8507 (JP); YANASE, Norimasa, c/o SEIKO INSTRUMENTS INC., Chiba-shi, Chiba 261-8507 (JP); OZAKI, Toru, c/o SEIKO INSTRUMENTS INC., Chiba-shi, Chiba 261-8507 (JP); TAMACHI, Tsuneaki, c/o SEIKO INSTRUMENTS INC., Chiba-shi, Chiba 261-8507 (JP); YUZURIHARA, Kazutaka, c/o SEIKO INSTRUMENTS INC., Chiba-shi, Chiba 261-8507 (JP); IWASAKI, Fumiharu, c/o SEIKO INSTRUMENTS INC., Chiba-shi, Chiba 261-8507 (JP)
(74) Representative: Strehl Schübel-Hopf & Partner
(86) International application number: PCT/JP2006/315302
(87) International publication number: WO 2007/015517

(57) **Abstract**

A solution vessel 4 freely changeable in volume is provided inside a reaction chamber 2. As a reactant solution 11 stored in the solution vessel 4 is supplied to a workpiece 3 placed in the reaction chamber 2, the volume of the solution vessel 4 is decreased, and the capacity of the reaction chamber 2 is increased. Thus, a region where hydrogen is generated is increased within a small space.

## Description

### Technical Field

This invention relates to hydrogen generation equipment which decomposes a metal hydride to generate hydrogen, and a fuel cell system which consumes, as a fuel, hydrogen generated by the hydrogen generation equipment.

### Background Art

As energy problems have attracted increasing attention in recent years, there has been a demand for a power source having a higher energy density and involving clean emissions. A fuel cell is a power generator having an energy density several times as high as that of the existing battery, and is characterized in that it has a high energy efficiency, and it is free from, or reduced in, nitrogen oxides or sulfur oxides contained in an emission gas. Thus, the fuel cell can be said to be a very effective device fulfilling requirements for a next-generation power source device.

With the fuel cell which obtains an electromotive force by an electrochemical reaction between hydrogen and oxygen, hydrogen is required as a fuel. A known example of equipment for generating a hydrogen gas is hydrogen generation equipment of a structure which has a reaction vessel accommodating a metal hydride (boron hydride salt), and a water tank, and in which water in the water tank is gushed to the metal hydride in the reaction vessel by a pump (see, for example, Patent Document 1).

In conventional hydrogen generation equipment, water in the water tank is supplied to the reactor via the pump. Thus, the capacity of the reactor is at least the sum of the volumes of the metal hydride (boron hydride salt) and water. Moreover, foams engulfing hydrogen are formed by a hydrogen generation reaction, so that the capacity of the reactor further needs the volume of the foams. Since the volume of the foams is at least twice that of the boron hydride salt, the volume of the hydrogen generation equipment becomes extremely large. As a result, it has been unrealistic to use the fuel cell as a power source device for a cellular phone or a digital camera.

Furthermore, the water tank becomes a dead space after supplying water, causing a waste of space in the hydrogen generation equipment.

Patent Document 1: Japanese Unexamined Patent Publication No. 2002-137903

### Disclosure of the Invention

### Problems to be solved by the invention

The present invention has been accomplished in the light of the above-described situations. It is an object of the invention to provide hydrogen generation equipment which can generate a sufficient amount of hydrogen with a small volume.

Moreover, the present invention has been accomplished in the light of the above-described situations. It is an object of the invention to provide a fuel cell system equipped with hydrogen generation equipment which can generate a sufficient amount of hydrogen with a small volume.

### Means for Solving the Problems

Hydrogen generation equipment according to claim 1 of the present invention, for attaining the above object, is hydrogen generation equipment, comprising: a reactant vessel accommodating a hydrogen generation reactant whose hydrogen generation is accelerated when fed with a reactant fluid; a fluid chamber disposed within the reactant vessel, accommodating the reactant fluid, and changeable in volume; and variable means which changes the volume of the fluid chamber to change in a capacity, and wherein as the fluid within the fluid chamber is supplied to the hydrogen generation reactant, the volume of the fluid chamber is decreased by the variable means to increase a capacity within the reactant vessel.

According to this feature, as the fluid stored in the fluid chamber is supplied to the hydrogen generation reactant, the volume of the fluid chamber can be decreased, and the capacity of the reactant vessel can be increased. Thus, the region where hydrogen is generated can be increased within a small space.

Hydrogen generation equipment according to claim 2 of the present invention, for attaining the above object, is hydrogen generation equipment, comprising: a reactant vessel accommodating a hydrogen generation reactant whose hydrogen generation is accelerated when fed with a reactant fluid; a fluid chamber disposed within the reactant vessel, accommodating the reactant fluid, and changeable in volume; pressurizing means for pressurizing the fluid chamber; discharge means for discharging hydrogen, generated within the reactant vessel, at a predetermined pressure; a fluid supply path for providing communication between the fluid chamber and the reactant vessel to permit flow of the reactant fluid; and opening and closing means which is provided in the fluid supply path and opens a flow path for the fluid when a pressure of the reactant vessel becomes a predetermined value or less, and wherein the fluid chamber is pressurized by the pressurizing means in such a manner as to be maintained at a pressure higher than the pressure which opens the opening and closing means, and the fluid chamber is pressurized such that the volume of the fluid chamber is decreased in accordance with a decrease in a capacity of the fluid chamber due to supply of the reactant fluid.

According to this feature, as the fluid stored in the fluid chamber is supplied to the hydrogen generation reactant, the volume of the fluid chamber can be decreased by the pressurizing means, whereby the capacity of the reactant vessel can be increased. Moreover, the fluid chamber is pressurized by the pressurizing means and, when the internal pressure of the reactant vessel has fallen to a predetermined pressure or lower, the opening and closing means opens to feed the reactant fluid to the reactant vessel. Thus, the reactant fluid is supplied to the hydrogen generation reactant to generate hydrogen. The resulting hydrogen is discharged at the predetermined pressure from the discharge means. Thus, the region where hydrogen is generated can be increased within a small space. Consequently, the reactant fluid is stably supplied in a pressure state, so that a sufficient amount of hydrogen can be generated.

Hydrogen generation equipment according to claim 3 of the present invention is the hydrogen generation equipment according to claim 2, wherein the fluid chamber is formed from a deformation permitting member, and the pressurizing means is pressing means for pressing the fluid chamber to decrease the volume of the fluid chamber and raise the pressure of the fluid chamber.

According to this feature, the fluid chamber formed from the deformation permitting member is pressed by the pressing means, whereby the volume of the fluid chamber can be decreased.

Hydrogen generation equipment according to claim 4 of the present invention is the hydrogen generation equipment according to claim 3, wherein the deformation permitting member of the fluid chamber is a bag member, a plate material is provided at an end portion of the bag member, and the fluid chamber is pressed via the plate material, whereby the bag member is deformed to decrease the volume of the fluid chamber.

According to this feature, the plate material is pressed to deform the bag member, whereby the volume of the fluid chamber can be decreased.

Hydrogen generation equipment according to claim 5 of the present invention is the hydrogen generation equipment according to claim 3, wherein the deformation permitting member of the fluid chamber is a bellows member, a plate material is provided at an end portion of the bellows member, and the fluid chamber is pressed via the plate material, whereby the bellows member shrinks to decrease the volume of the fluid chamber.

According to this feature, the bellows member is pressed via the plate material to contract the bellows member, whereby the volume of the fluid chamber can be decreased.

Hydrogen generation equipment according to claim 6 of the present invention is the hydrogen generation equipment according to claim 3, wherein the deformation permitting member of the fluid chamber is a cylinder having an end portion opened, and a piston plate provided on an open end side of the cylinder, and the piston plate is pressed, whereby a capacity of the cylinder is decreased to increase an open volume and decrease the volume of the fluid chamber.

According to this feature, the piston plate is pressed to decrease the capacity of the cylinder, whereby the open volume can be increased and the volume of the fluid chamber can be decreased.

Hydrogen generation equipment according to claim 7 of the present invention is the hydrogen generation equipment according to any one of claims 3 to 6, wherein the pressing means is a compression spring.

According to this feature, a very simple configuration enables the fluid chamber to be pressed by the urging force of the compression spring.

Hydrogen generation equipment according to claim 8 of the present invention is the hydrogen generation equipment according to any one of claims 2 to 7, wherein the opening and closing means is a pressure regulating valve designed such that in a constant pressure state where an internal pressure of the reactant vessel becomes lower than an internal pressure of the fluid chamber by a predetermined value , a valve body of the pressure regulating valve opens to permit the flow of the reactant fluid from the fluid chamber to the reactant vessel.

According to this feature, the reactant fluid can be fed to the reactant vessel at a predetermined pressure with the use of the pressure regulating valve whose valve body is opened in the presence of a predetermined pressure difference.

A fuel cell system according to claim 9 of the present invention, for attaining the above object, is a fuel cell system, comprising: a fuel cell having an anode compartment which is supplied with hydrogen; and the hydrogen generation equipment of any one of claims 1 to 8, wherein discharge means of the hydrogen generation equipment is connected to the anode compartment of the fuel cell.

According to this feature, there can be constructed a fuel cell system equipped with hydrogen generation equipment configured such that as the fluid stored in the fluid chamber is supplied to the hydrogen generation reactant, the volume of the fluid chamber can be decreased, and the capacity of the reactant vessel can be increased, with the result that the region where hydrogen is generated can be increased within a small space.

A fuel cell system according to claim 10 of the present invention is the fuel cell system according to claim 9, wherein the anode compartment and the reactant vessel form a closed space.

According to this feature, hydrogen generated does not flow out to the exterior, so that the total amount of the resulting hydrogen can be used.

### Effects of the Invention

The hydrogen generation equipment of the present invention can be provided as hydrogen generation equipment which can generate a sufficient amount of hydrogen with a small volume.
Moreover, the fuel cell system of the present invention can be provided as a fuel cell system equipped with hydrogen generation equipment which can generate a sufficient amount of hydrogen with a small volume.

### Brief Description of the Drawings

[Fig. 1] is a schematic configuration drawing of hydrogen generation equipment according to a first embodiment of the present invention.
[Fig. 2] is a schematic configuration drawing of hydrogen generation equipment according to a second embodiment of the present invention.
[Fig. 3] is a schematic configuration drawing of hydrogen generation equipment according to a third embodiment of the present invention.
[Fig. 4] is a schematic configuration drawing of a fuel cell system according to an embodiment of the present invention.
[Fig. 5] is a schematic configuration drawing of a fuel cell system according to another embodiment of the present invention.
[Fig. 6] is a schematic configuration drawing of a fuel cell system according to still another embodiment of the present invention.

### Description of the Numerals and Symbols

- 1, 15, 21, 42, 62: Hydrogen generation equipment
- 2, 45: Reaction chamber
- 3, 46: Workpiece
- 4, 16, 22, 47: Solution vessel
- 5: Liquid feed pipe
- 6, 17: Weighting plate
- 7: Compression spring
- 10, 44: Hydrogen conduit
- 11, 48: Reactant solution
- 12: Regulator
- 13, 55, 64: Pressure regulating valve
- 23: Cylinder
- 24: Piston plate
- 25: Cylinder chamber
- 30, 41, 61: Fuel cell system
- 31, 43: Fuel cell
- 32, 58: Anode chamber
- 33, 59: Fuel cell unit cell
- 49: Temporary reservoir
- 50: Supply pipe
- 51: Discharge pipe
- 52, 63: Check valve
- 56: Air intake

### Best Mode for Carrying Out the Invention

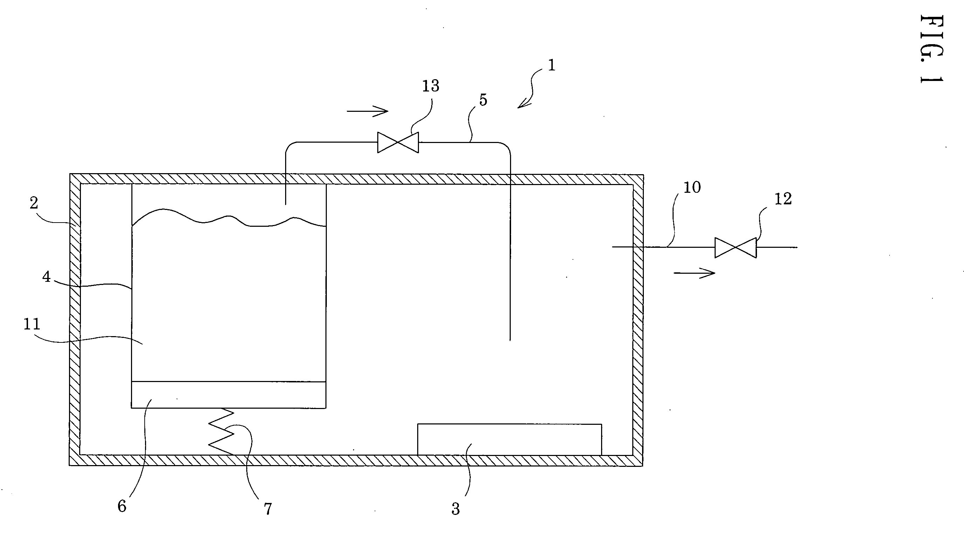

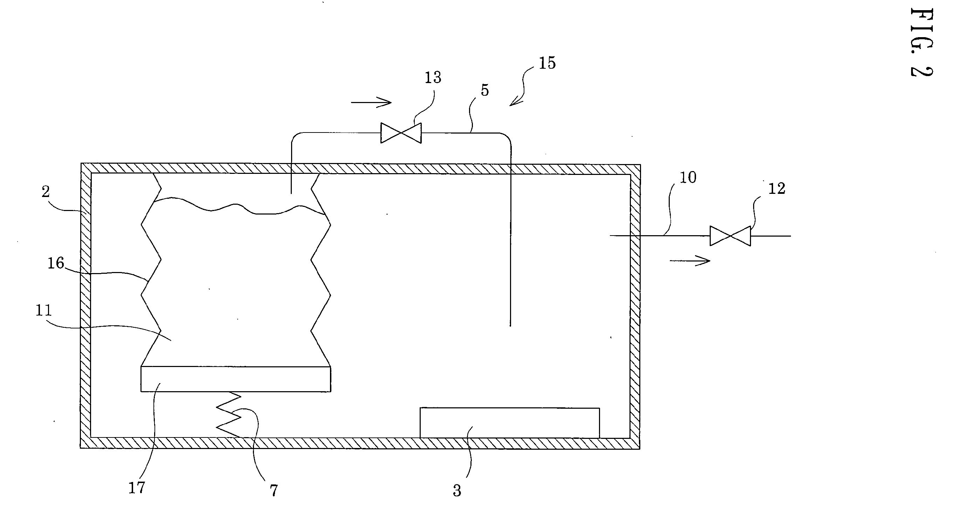

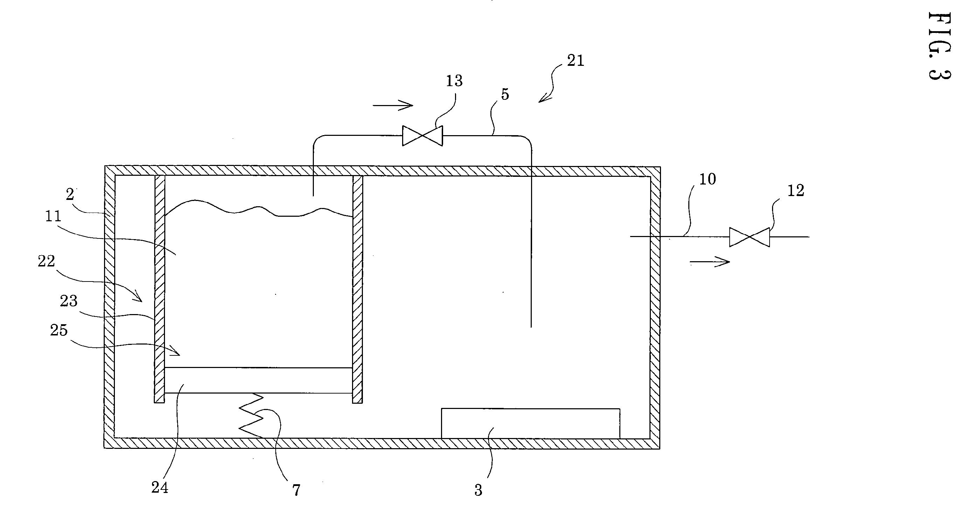

Fig. 1 shows the schematic configuration of hydrogen generation equipment according to a first embodiment of the present invention. Fig. 2 shows the schematic configuration of hydrogen generation equipment according to a second embodiment of the present invention. Fig. 3 shows the schematic configuration of hydrogen generation equipment according to a third embodiment of the present invention.

The first embodiment will be described based on Fig. 1.
Hydrogen generation equipment 1 is equipped with a reaction chamber 2 as a reactant vessel, and a workpiece 3 (e.g., sodium borohydride) as a hydrogen generation reactant is stored in the reaction chamber 2. A solution vessel 4 as a fluid chamber is provided inside the reaction chamber 2, and a reactant solution 11 (e.g., an aqueous solution of malic acid), which is a reactant fluid, is stored in the solution vessel 4. The reaction chamber 2 and the solution vessel 4 are connected by a liquid feed pipe 5 as a fluid supply path. The liquid feed pipe 5 connects the reaction chamber 2 and the solution vessel 4 together by way of the outside of the reaction chamber 2.

The solution vessel 4 comprises, for example, a bag member formed of polypropylene (flexible material: a film or a sheet-shaped material of resin or rubber), and has a weighting plate 6 as a plate material provided at the bottom thereof. A compression spring 7 as a pressing means is provided between the weighting plate 6 and the bottom wall of the reaction chamber 2, and the weighting plate 6 is urged by the compression spring 7. As the solution vessel 4, a flexible material, such as PET, silicone, silicone rubber, butyl rubber, or isoprene rubber, can be applied in addition to polypropylene.

The solution vessel 4 is always pressed via the compression spring 7 and the weighting plate 6. Thus, under conditions where the reactant solution 11 flows through the liquid feed pipe 5, the reactant solution 11 can be pushed out of the solution vessel 4. When the reactant solution 11 is pushed out, the bag member is deformed, and the volume of the solution vessel 4 is decreased, because the solution vessel 4 is pressed via the weighting plate 6. Thus, the capacity of the reaction chamber 2 is increased correspondingly. When the reactant solution 11 is sent to the reaction chamber 2 through the liquid feed pipe 5, the reactant solution 11 and the workpiece 3 come into contact to cause a hydrogen generation reaction in the reaction chamber 2 whose capacity has increased.

A hydrogen conduit 10 as a discharge means is connected to the reaction chamber 2, and a regulator 12 (pressure regulating valve) is provided in the hydrogen conduit 10. The amount of hydrogen discharge from the reaction chamber 2 is regulated by the regulator 12. Although it is designed that the amount of hydrogen discharge can be controlled by the regulator 12, it is possible to discharge hydrogen at a constant hydrogen pressure with the use of a constant pressure valve.

A pressure regulating valve 13 for pressure regulation is installed in the liquid feed pipe 5 at a site outside of the reaction chamber 2 , and the pressure regulating valve 13 is a valve for regulating the pressure when the reactant solution 11 is allowed to flow. The output pressure when the reactant solution 11 is allowed to flow is the pressure during opening of the pressure regulating valve 13 (valve opening pressure). When the pressure inside the reaction chamber 2 exceeds the valve opening pressure, the pressure regulating valve 13 closes. When the pressure inside the reaction chamber 2 becomes lower than the valve opening pressure (falls to a predetermined value or lower), the pressure regulating valve 13 opens.

That is, the pressure regulating valve 13 serves as an opening and closing means for opening the flow path of the liquid feed pipe 5 when the pressure of the reaction chamber 2 has become the predetermined value or lower. This means that the internal pressure of the solution vessel 4 is kept at a value higher than the pressure for opening of the pressure regulating valve 13 (is kept at a pressure exceeding the predetermined pressure value of the reaction chamber 2 adapted to open the pressure regulating valve 13) as a result of pressurization. The pressure regulating valve 13 is designed such that in a constant pressure state where the internal pressure of the reaction chamber 2 falls to the predetermined value or lower, the valve body of the pressure regulating valve 13 opens to permit the flow of the reactant solution 11 from the solution vessel 4 to the reaction chamber 2.

The pressure regulating valve 13 is, for example, a constant pressure valve, and is composed of a primary flow path which is a flow path on the side of the solution vessel 4, a secondary flow path which is a flow path on the side of the reaction chamber 2, the valve body provided between the primary flow path and the secondary flow path, an external pressure transmission path for transmitting the pressure of the outside to the valve, and an internal pressure transmission path for transmitting the internal pressure of the reaction chamber 2 to the valve body.

As noted above, the reaction chamber 2 and the solution vessel 4 are connected by the liquid feed pipe 5 by way of the outside of the reaction chamber 2. However, the liquid feed pipe 5 can be disposed inside the reaction chamber 2. Moreover, a check valve can be provided in a nozzle portion of the liquid feed pipe 5 opening into the reaction chamber 2. By providing the check valve, backflow of hydrogen generated in the reaction chamber 2, or foams engulfing such hydrogen can be prevented. This decreases limitations on the posture of the hydrogen generation equipment 1 when in use.

The actions of the above-described hydrogen generation equipment 1 will be described.
The reactant solution 11 is fed from the solution vessel 4 to the reaction chamber 2 through the liquid feed pipe 5. In addition to the pressurization of the solution vessel 4, the internal pressure of the reaction chamber 2 in the absence of hydrogen generation is rendered so low as to open the pressure regulating valve 13. Thus, the reactant solution 11 is fed through the liquid feed pipe 5.

Upon feeding of the reactant solution 11 to the reaction chamber 2, the reactant solution 11 and the workpiece 3 contact and react to generate hydrogen. Once hydrogen is generated, the internal pressure of the reaction chamber 2 rises, and exceeds the valve opening pressure of the pressure regulating valve 13 (brings the pressure regulating valve 13 to closure). Upon elevation of the internal pressure of the reaction chamber 2, the pressure regulating valve 13 enters into a closed state to stop the supplyof the reactant solution 11 through the liquid feed pipe 5.

When the reactant solution 11 is not supplied any more, the reaction rate of the hydrogen generation reaction in the reaction chamber 2 lowers, and generated hydrogen is discharged through the hydrogen conduit 10 of the reaction chamber 2. Since the internal pressure of the reaction chamber 2 lowers, it becomes such a low pressure that the pressure regulating valve 13 is opened. As a result, the reactant solution 11 is fed again from the solution vessel 4 to the reaction chamber 2, whereby the reactant solution 11 and the workpiece 3 contact to generate hydrogen.

Here, a pressurizing means is used to feed the reactant solution 11 from the solution vessel 4. That is, the weighting plate 6 is urged by the compression spring 7 to deform the bag member into a state where the volume of the solution vessel 4 is decreased. At the same time, the reactant solution 11 is pressurized, and the reactant solution 11 is fed by the pressurizing force. The reactant solution 11 is always subject to the force, with which it is discharged from the solution vessel 4, by pressurization resulting from the deformation (volume decrease) of the solution vessel 4 by means of the compression spring 7 via the weighting plate 6. However, the pressure changes according to the amount of displacement of the compression spring 7.

In connection with the change in the discharge speed of the reactant solution 11, there is the pressure regulating valve 13 which is open owing to a decrease in the internal pressure of the reactant solution 11, and whose valve opening pressure is constant. Thus, the discharge speed of the reactant solution 11 is constant, regardless of the pressure of the solution vessel 4. Furthermore, the pressure regulating valve 13 is opened and closed depending on the relationship between the internal pressure and the external pressure of the reaction chamber 2. Since the external pressure (concretely, atmospheric pressure) is constant, the internal pressure of the reaction chamber 2 is kept nearly constant.

Hence, the reactant solution 11 can be stably supplied to the reaction chamber 2 in accordance with the pressure state without use of power, whereby hydrogen can be generated. By urging the weighting plate 6 to vary the volume of the solution vessel 4, moreover, the solution vessel 4 is pressurized, whereby a pressure state permitting the pressure regulating valve 13 to open can be retained. Furthermore, the weighting plate 6 is pressed by the urging force of the compression spring 7. Thus, a very simple configuration enables the weighting plate 6 to be pressed.

As the reactant solution 11 of the solution vessel 4 is supplied to the workpiece 3 of the reaction chamber 2, the weightingplate 6 is pressed by the urging force of the compression spring 7 to decrease the volume of the solution vessel 4. Thus, the capacity of the reaction chamber 2 can be increased by an amount corresponding to the decrease in the volume of the solution vessel 4. Hence, a dead space is eliminated, so that the region of hydrogen generation can be increased despite a small space, making space saving possible without reducing the amount of hydrogen generation. Furthermore, the amount of hydrogen generation can be increased without an increase in space.

Consequently, the above-described hydrogen generation equipment 1 enables a sufficient amount of hydrogen to be generated with a small volume.

Concrete examples of the workpiece 3 and the reactant solution 11 will be described.
Sodium borohydride is used as the workpiece 3, and an aqueous solution of malic acid is used as the reactant solution 11. Sodium borohydride is solid, and may be in the form of a powder or tablets. The aqueous solution of malic acid is used in a concentration of 5% or more, but 60% or less, preferably 10% or more, but 40% or less. Usually, the aqueous solution of malic acid with a concentration of 25% is used. The hydrogen generation reaction is a reaction between sodium borohydride and water of the aqueous solution of malic acid. Malic acid acts as a reaction accelerator.

NaBH₄ + 2H₂O → NaBO₂ + 4H₂

This reaction involving the reaction accelerator is so fast that a yield of nearly 90% is obtained in a time of the order of 10 seconds. To perform the reaction as slowly as possible, while generating a necessary amount of hydrogen, it suffices to control the amount of water supplied to sodium borohydride.

In the present embodiment, the feeding of the reactant solution 11 takes place when the pressure within the reaction chamber 2 becomes lower than the valve opening pressure of the pressure regulating valve 13. Actually, such a design as to minimize pressure changes within the reaction chamber 2 is adopted. The pressure within the reaction chamber 2 is determined by the rate of discharge of hydrogen from the reaction chamber 2, the rate of supply of the reactant solution 11, the rate of the reaction between the workpiece 3 and the reactant solution 11, and the capacity of the reaction chamber 2. Of these parameters, the rate of the reaction is constant, and the rate of hydrogen discharge is determined by the setting of the regulator 12. Since the reactant solution 11 is supplied in a dripped manner from the liquid feed pipe 5 to the workpiece 3, the rate of its supply depends on the rate of formation of liquid droplets at the opening end of the liquid feed pipe 5. That is, pressure changes within the reaction chamber 2 can be kept to a minimum by defining the internal diameter of the opening end of the liquid feed pipe 5. For example, the following design values and specifications are applied:

| | |
|---|---|
| Rate of hydrogen discharge | 15 cc/min |
| Capacity of reaction chamber 2 | 70 cc |
| Rate of supply of reactant solution 11 | 0.006 cc/min |
| Internal diameter of opening end of liquid feed pipe 5 | 0.2 mm |
| Internal diameter of liquid feed pipe | 2.0 mm |
| Valve opening pressure of pressure regulating valve 13 | 100 kPa (gauge pressure) |

That is, the internal pressure of the solution vessel 4 in the present embodiment is maintained at a pressure higher than 100 kPa as a result of pressurization by the compression spring 9. The valve opening pressure of the pressure regulating valve 13 is set such that the pressure regulating valve 13 opens when the pressure within the reaction chamber 2 becomes 100 kPa. Thus, even under a pressure higher than atmospheric pressure, there is no need to control the pressurizing means with high accuracy.

The valve opening pressure of the pressure regulating valve 13 is not limited to 100 kPa, as long as it is set at a predetermined value such that the internal pressure of the reaction chamber 2 is low compared with the internal pressure of the solution vessel 4. For example, the valve opening pressure can be set at an arbitrary value, such as a predetermined value of 0 kPa (atmospheric pressure) as gauge pressure.

When the pressure regulating valve 13 opens to feed the reactant solution 11 to the reaction chamber 2, the pressure changes according to the reaction rate of hydrogen generation and the status of the instruments. It goes without saying that 100 kPa, which is the design value of the valve opening pressure of the pressure regulating valve 13, is a design value taking into consideration a value which accommodates such pressure changes. Consequently, an operation can be performed, with the pressure of the reaction chamber 2 being maintained as constant as possible.

Strictly, however, the supply of the reactant solution 11 results in a decrease in the volume of the solution vessel 4 and an increase in the capacity of the reaction chamber 2. To render pressure changes within the reaction chamber 2 smaller, therefore, it is preferred to take a measure for suppressing pressure changes, such as fine adjustment of the rate of hydrogen discharge.

Examples of combinations of the workpiece 3 and the reactant solution 11 will be explained.
When a boron hydride salt, an aluminum hydride salt, a solid, or a basic solution is used as the workpiece 3, an organic acid of a concentration of 5% to 60% (10% to 40%), usually 25%, is used as the reactant solution 11. Sodium, potassium or lithium is used as the salt of the workpiece 3, and citric acid, malic acid or succinic acid is used as the organic acid of the reactant solution 11.

When a boron hydride salt, an aluminum hydride salt, a solid, or a basic solution is used as the workpiece 3, moreover, a metal chloride at a concentration of 1% to 20% is used as the reactant solution 11. Sodium, potassium or lithium is used as the salt of the workpiece 3, and nickel, iron or cobalt at a concentration, usually, of 12% is used as the metal of the reactant solution 11.

When a metal chloride (a solid or an aqueous solution) is used as the workpiece 3, a basic solution of a boron hydride salt or an aluminum hydride salt, which has a concentration of 1% to 20%, usually 12%, is used as the reactant solution 11. Nickel, iron or cobalt is used as the metal of the workpiece 3, and sodium, potassium or lithium is used as the salt of the reactant solution 11.

When a metal regarded as being lower in oxidation-reduction potential than hydrogen is used as the workpiece 3, an acid is used as the reactant solution 11. Magnesium, aluminum or iron is used as the metal of the workpiece 3, and hydrochloric acid or sulfuric acid is used as the acid of the reactant solution 11.

When an amphoteric metal is used as the workpiece 3, a basic aqueous solution is used as the reactant solution 11. Aluminum, zinc, tin, or lead is used as the amphoteric metal of the workpiece 3, and sodium hydroxide is used as the basic aqueous solution of the reactant solution 11.

A second embodiment of the present invention will be described based on Fig. 2. The same members as those shown in Fig. 1 are assigned the same numerals as in Fig. 1, and duplicate explanations are omitted.

Hydrogen generation equipment 15 according to the second embodiment is equipped with a solution vessel 16, as a fluid chamber, within a reaction chamber 2, instead of the solution vessel 4 shown in Fig. 1. A reactant solution 11 (for example, an aqueous solution of malic acid) is stored in the solution vessel 16. The reaction chamber 2 and the solution vessel 16 are connected by a liquid feed pipe 5 as a fluid supply path. The liquid feed pipe 5 connects the reaction chamber 2 and the solution vessel 16 together by way of the outside of the reaction chamber 2.

The solution vessel 16 is composed of a bellows comprising a bellows member as a deformation permitting member, and comprises, for example, SUS, phosphor bronze, or beryllium. A weighting plate 17 as a plate material is provided at the bottom of the solution vessel 16 (end portion of the bellows member). A compression spring 7 is provided between the weighting plate 17 and the bottom wall of the reaction chamber 2, and the weighting plate 17 is urged by the compression spring 7. By pressing the solution vessel 16 via the weighting plate 17, the bellows shrinks to decrease the volume of the solution vessel 16.

The solution vessel 16 is always pressed via the compression spring 7 and the weighting plate 17. Thus, under conditions where the reactant solution 11 flows through the liquid feed pipe 5, the reactant solution 11 can be pushed out of the solution vessel 16. When the reactant solution 11 is pushed out, the bellows shrinks, and the volume of the solution vessel 16 decreases, because the solution vessel 16 is pressed via the weighting plate 17. Thus, the capacity of the reaction chamber 2 is increased correspondingly. When the reactant solution 11 is sent to the reaction chamber 2 through the liquid feed pipe 5, the reactant solution 11 and the workpiece 3 contact to cause a hydrogen generation reaction in the reaction chamber 2 whose capacity has increased.

Other features and actions, reaction conditions, design values, etc. are the same as those in the first embodiment shown in Fig. 1.

Hence, the reactant solution 11 can be stably supplied to the reaction chamber 2 in accordance with the pressure state without use of power, whereby hydrogen can be generated. By urging the weighting plate 17 to contract the bellows, thereby varying the volume of the solution vessel 16, the solution vessel 16 is pressurized, whereby a pressure state permitting the pressure regulating valve 13 to open can be retained. As the reactant solution 11 of the solution vessel 16 is supplied to the workpiece 3 of the reaction chamber 2 , the weighting plate 17 is pressed by the urging force of the compression spring 7 to contract the bellows, thereby decreasing the volume of the solution vessel 16. Thus, the capacity of the reaction chamber 2 can be increased by an amount corresponding to the decrease in the volume of the solution vessel 16. Hence, a dead space is eliminated, so that the region of hydrogen generation can be increased within a small space, making space saving possible without reducing the amount of hydrogen generation. Furthermore, the amount of hydrogen generation can be increased without an increase in space.

Consequently, the above-described hydrogen generation equipment 15 enables a sufficient amount of hydrogen to be generated with a small volume.

A third embodiment of the present invention will be described based on Fig. 3. The same members as those shown in Figs. 1 and 2 are assigned the same numerals as in Figs. 1 and 2, and duplicate explanations are omitted.

Hydrogen generation equipment 21 according to the third embodiment is equipped with a solution vessel 22, as a fluid chamber, within a reaction chamber 2, instead of the solution vessel 4 shown in Fig. 1. A reactant solution 11 (for example, an aqueous solution of malic acid) is stored in the solution vessel 22. The reaction chamber 2 and the solution vessel 22 are connected by a liquid feed pipe 5 as a fluid supply path. The liquid feed pipe 5 connects the reaction chamber 2 and the solution vessel 22 together by way of the outside of the reaction chamber 2.

The solution vessel 22 is composed of a cylinder 23 having an end portion (lower end portion) opened, and a piston plate 24 movably provided on the open end side of the cylinder 2 3 (a so-called syringe structure). The capacity of a cylinder chamber 25 is rendered variable by the movement of the piston plate 24, and the reactant solution 11 is stored in the cylinder chamber 25. A compression spring 7 is provided between the piston plate 24 and the bottom wall of the reaction chamber 2, and the piston plate 24 is urged by the compression spring 7. By pressing the piston plate 24, the capacity of the cylinder chamber 25 of the cylinder 23 is decreased to increase the open volume of the solution vessel 22 and decrease the volume of the solution vessel 22.

The piston plate 24 of the solution vessel 22 is always pressed via the compression spring 7. Thus, under conditions where the reactant solution 11 flows through the liquid feed pipe 5, the reactant solution 11 can be pushed out of the cylinder chamber 25 of the solution vessel 22. When the reactant solution 11 is pushed out, the capacity of the cylinder chamber 25 decreases and the volume of the solution vessel 22 decreases, because the cylinder chamber 25 is pressed by the piston plate 24. Thus, the capacity of the reaction chamber 2 is increased correspondingly. When the reactant solution 11 is sent to the reaction chamber 2 through the liquid feed pipe 5, the reactant solution 11 and the workpiece 3 come into contact to cause a hydrogen generation reaction in the reaction chamber 2 whose capacity has increased.

Other features and actions, reaction conditions, design values, etc. are the same as those in the first embodiment shown in Fig. 1.

Hence, the reactant solution 11 can be stably supplied to the reaction chamber 2 in accordance with the pressure state without use of power, whereby hydrogen can be generated. By urging the piston plate 24 to decrease the capacity of the cylinder chamber 25, vary the volume of the solution vessel 22, and pressurize the solution vessel 22, a pressure state permitting the pressure regulating valve 13 to open can be retained.

As the reactant solution 11 of the solution vessel 22 is supplied to the workpiece 3 of the reaction chamber 2, the piston plate 24 is pressed by the urging force of the compression spring 7 to decrease the capacity of the cylinder chamber 25, thereby decreasing the volume of the solution vessel 22. Thus, the capacity of the reaction chamber 2 can be increased by an amount corresponding to the decrease in the volume of the solution vessel 22. Hence, a dead space is eliminated, so that the region of hydrogen generation can be increased within a small space, making space saving possible without reducing the amount of hydrogen generation. Furthermore, the amount of hydrogen generation can be increased without an increase in space.

Consequently, the above-described hydrogen generation equipment 21 enables a sufficient amount of hydrogen to be generated with a small volume.

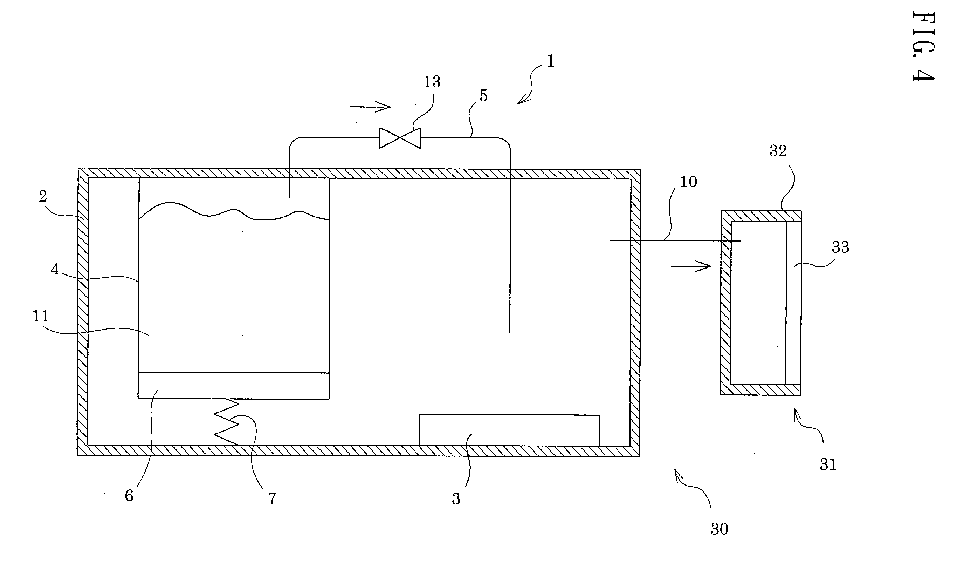

The fuel cell system of the present invention will be described based on Fig. 4.
Fig. 4 shows the schematic configuration of a fuel cell system according to an embodiment of the present invention.

A fuel cell system 30 shown in Fig. 4 is a system in which the hydrogen generation equipment 1 shown in Fig. 1 is connected to a fuel cell 31. That is, the fuel cell 31 is equipped with an anode chamber 32, and the anode chamber 32 constitutes a space contiguous to an anode compartment of a fuel cell unit cell 33. The anode compartment is a space for temporarily holding hydrogen to be consumed by an anode.

The anode chamber 32 and the reaction chamber 2 are connected by a hydrogen conduit 10, and hydrogen generated in the reaction chamber 2 is supplied to the anode compartment of the anode chamber 32. Hydrogen supplied to the anode compartment is consumed by a fuel cell reaction in the anode. The amount of hydrogen consumption in the anode is determined by the output current of the fuel cell 31.

The regulator 12 provided in the hydrogen conduit 10 shown in Fig. 1 is not mounted, because it need not be installed. Instead of the hydrogen generation equipment 1, it is possible to apply the hydrogen generation equipment 15 shown in Fig. 2 or the hydrogen generation equipment 21 shown in Fig. 3.

The above-mentioned fuel cell system 30 can be configured as the fuel cell system 30 equipped with the hydrogen generation equipment 1 which can generate a sufficient amount of hydrogen with a small volume.

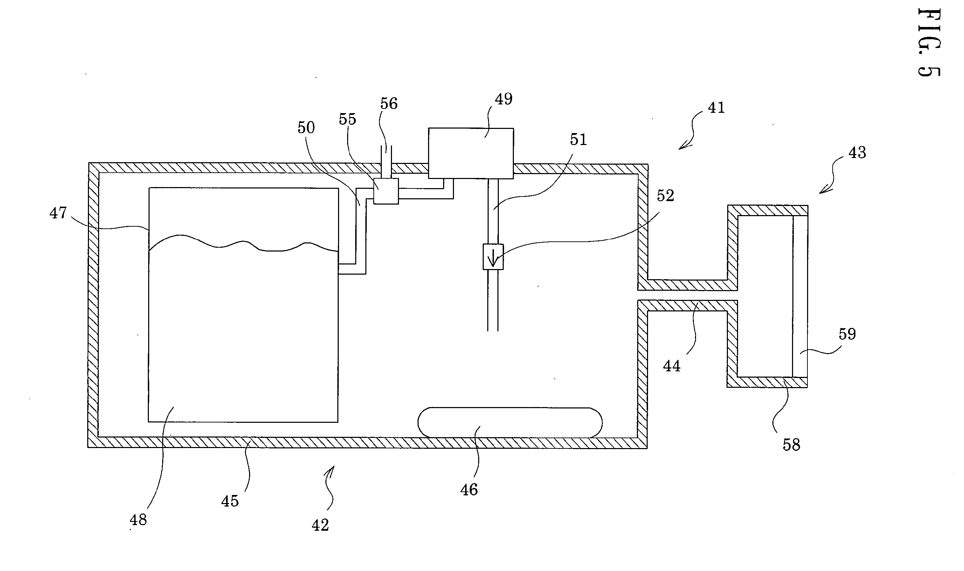

Another embodiment of the fuel cell system of the present invention will be described based on Fig. 5.
Fig. 5 shows the schematic configuration of a fuel cell system according to another embodiment of the present invention.

As shown in the drawing, a fuel cell system 41 is composed of hydrogen generation equipment 42 and a fuel cell 43. The hydrogen generation equipment 42 and the fuel cell 43 are connected by a hydrogen conduit 44.

The hydrogen generation equipment 42 will be described.
The hydrogen generation equipment 42 is equipped with a reaction chamber 45 as a reactant vessel, and a workpiece 46 (e.g., sodium borohydride) as a hydrogen generation reactant is stored in the reaction chamber 45. A solution vessel 47 as a fluid chamber is provided inside the reaction chamber 45, and a reactant solution 48 (e.g., an aqueous solution of malic acid), which is a reactant fluid, is stored in the solution vessel 47.

A temporary reservoir 49 is provided in the exterior of the reaction chamber 45, and the solution vessel 47 and the temporary reservoir 49 are connected by a supply pipe 50. A pressure regulating valve 55 is provided in the supply pipe 50, and when the pressure from the supply pipe 50 reaches a predeterminedpressure or higher, the pressure regulating valve 55 opens to send the reactant solution 48 to the temporary reservoir 49. In the drawing, the numeral 56 denotes an air intake through which the air is taken in for the opening and closing actions of the pressure regulating valve 55.

A discharge pipe 51 opening into the reaction chamber 45 is connected to the temporary reservoir 49, and a check valve 52 is provided in the discharge pipe 51. By the action of the check valve 52, the reactant solution 48 from the temporary reservoir 49 is allowed to pass through the discharge pipe 51, and the backflow of the reactant solution 48 from the reaction chamber 45 is prevented. When the reactant solution 48 is fed to the reaction chamber 45 through the discharge pipe 51, the reactant solution 48 and the workpiece 46 contact to cause a hydrogen generation reaction in the reaction chamber 45.

The solution vessel 47 is a container as a bag-shaped member comprising a flexible film (e.g., polypropylene). Upon feeding of the reactant solution 48 to the temporary reservoir 49, and upon pressurization by hydrogen generated in the reaction chamber 45 (i.e., a variable means), the volume of the solution vessel 47 is decreased. That is, as the reactant solution 48 is supplied from the solution vessel 47 to the reaction chamber 45, the volume of the solution vessel 47 is decreased, and the capacity of the reaction chamber 45 is increased correspondingly.

The fuel cell 43 will be described.
The fuel cell 43 is equipped with an anode chamber 58, and the anode chamber 58 constitutes a space contiguous to an anode compartment of a fuel cell unit cell 59. The anode compartment is a space for temporarily holding hydrogen to be consumed by an anode. The anode chamber 58 and the reaction chamber 45 are connected by the hydrogen conduit 44, and hydrogen generated in the reaction chamber 45 is supplied to the anode compartment of the anode chamber 58. Hydrogen supplied to the anode compartment is consumed by a fuel cell reaction in the anode. The amount of hydrogen consumption in the anode is determined by the output current of the fuel cell 43.

The actions of the above-mentioned fuel cell system 41 will be described.
When the fuel cell unit cell 59 is connected to a load, hydrogen inside the fuel cell system 41 and oxygen in air cause a fuel cell reaction to generate electricpower. Since power generation proceeds while consuming hydrogen, the internal pressure of the anode chamber 58, the hydrogen conduit 44, and the reaction chamber 45 falls. Here, the temporary reservoir 49 is subjected to atmospheric pressure. If the internal pressure becomes lower than atmospheric pressure, therefore, a differential pressure arises between the temporary reservoir 49 and the reaction chamber 45. As a result, the reactant solution 48 (aqueous malic acid solution) stored in the temporary reservoir 49 passes through the discharge pipe 51 and moves into the reaction chamber 45.

When the reactant solution 48 moves into the reaction chamber 45, the reactant solution 48 comes into contact with the workpiece 46 (sodium borohydride) to cause a hydrogen generation reaction. Hydrogen generated passes through the hydrogen conduit 44, and is supplied to the anode chamber 58. Because of hydrogen generation, the internal pressure of the reaction chamber 45, the hydrogen conduit 44, and the anode chamber 58 exceeds atmospheric pressure, with the result that the internal pressure of the reaction chamber 45 becomes higher than the pressure of the temporary reservoir 49. Thus, hydrogen is about to flow backward through the discharge pipe 51, but this backflow is prevented by the check valve 52.

On the other hand, the solution vessel 47 is compressed under the internal pressure of the reaction chamber 45, whereby the reactant solution 48 stored within the solution vessel 47 is moved to the pressure regulating valve 55 through the supply pipe 50. The pressure regulating valve 55 is subjected to the pressure of the reactant solution 48, for example, at 10 kPa (gauge pressure) in the valve closing direction. When the internal pressure of the reaction chamber 45 exceeds 10 kPa (gauge pressure), the force in the valve opening direction surpasses the force in the valve closing direction under the pressure of the reactant solution 48. Thus, the pressure regulating valve 55 opens to supply the reactant solution 48 to the temporary reservoir 49.

Then, the rate of hydrogen generation lowers, and the rate of hydrogen consumption in the fuel cell 43 surpasses it, whereupon the internal pressure of the anode chamber 58, the hydrogen conduit 44, and the reaction chamber 45 begins to lower. While the internal pressure remains higher than 10 kPa (gauge pressure), the pressure regulating valve 55 is open, so that the reactant solution 48 flows from the temporary reservoir 49 into the solution vessel 47. When the internal pressure becomes lower than 10 kPa (gauge pressure), the pressure regulating valve 14 is closed. The internal pressure of the temporary reservoir 49 at this time is rendered 10 kPa (gauge pressure). If the internal pressure of the reaction chamber 45 further lowers, a pressure difference occurs between the temporary reservoir 49 and the reaction chamber 45. As a result, the check valve 52 opens, and the reactant solution 48 passes through the discharge pipe 51, moving to the reaction chamber 45. Thus, the reactant solution 48 contacts the workpiece 46 to cause a hydrogen generation reaction, raising the internal pressure of the reaction chamber 45 again.

In accordance with the repetition of the above procedure, hydrogen is generated, and hydrogen as a fuel is supplied to the anode chamber 58 of the fuel cell 43.

As the reactant solution 48 is supplied from the solution vessel 47 to the reaction chamber 2, the volume of the solution vessel 47 is decreased, and the capacity of the reaction chamber 45 is increased correspondingly. Hence, a dead space is eliminated, so that the region of hydrogen generation can be increased within a small space, making space saving possible without reducing the amount of hydrogen generation. Furthermore, the amount of hydrogen generation can be increased without an increase in space.

The above-mentioned fuel cell system 41 can be configured as the fuel cell system 41 equipped with the hydrogen generation equipment 42 which can generate a sufficient amount of hydrogen with a small volume.

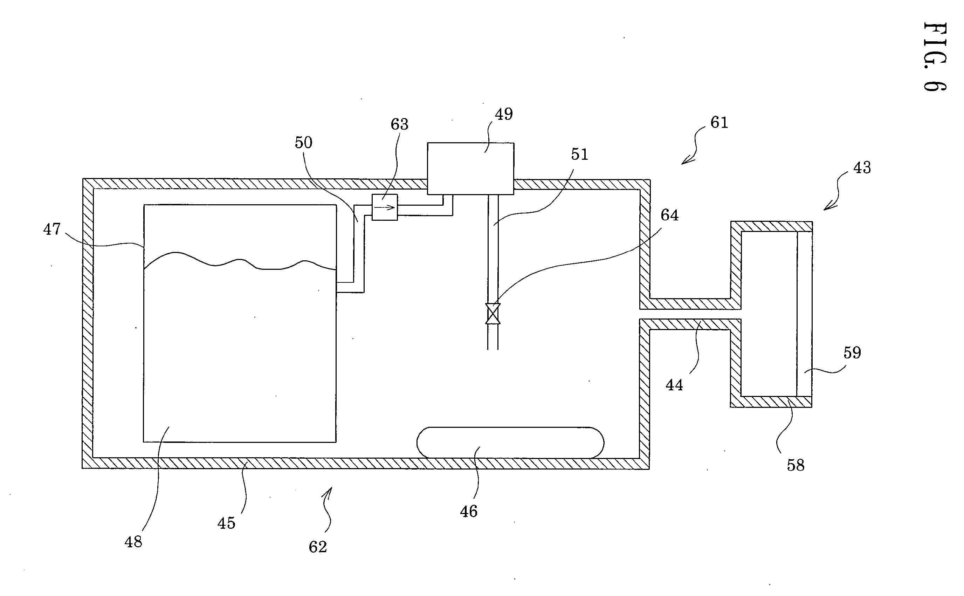

Still another embodiment of the fuel cell system of the present invention will be described based on Fig. 6.
Fig. 6 shows the schematic configuration of a fuel cell system according to still another embodiment of the present invention. The same members as those shown in Fig. 5 are assigned the same numerals as in Fig. 5.

As shown in the drawing, a fuel cell system 61 is composed of hydrogen generation equipment 62 and a fuel cell 43. The hydrogen generation equipment 62 and the fuel cell 43 are connected by a hydrogen conduit 44.

The hydrogen generation equipment 62 will be described.
The hydrogen generation equipment 62 is equipped with a reaction chamber 45 as a reactant vessel, and a workpiece 46 (e.g., sodium borohydride) as a hydrogen generation reactant is stored in the reaction chamber 45. A solution vessel 47 as a fluid chamber is provided inside the reaction chamber 45, and a reactant solution 48 (e.g., an aqueous solution of malic acid), which is a reactant fluid, is stored in the solution vessel 47.

A temporary reservoir 49 is provided in the exterior of the reaction chamber 45, and the solution vessel 47 and the temporary reservoir 49 are connected by a supply pipe 50. A check valve 63 is provided in the supply pipe 50. By the action of the check valve 63, the reactant solution 48 from the solution vessel 47 is allowed to pass through the supply pipe 50, and the backflow of the reactant solution 48 from the temporary reservoir 49 is prevented. The solution vessel 47 is pressurized by hydrogen generated in the reaction chamber 45, and when the pressure from the supply pipe 50 reaches the pressure of the temporary reservoir 49 or higher, the reactant solution 48 is sent to the temporary reservoir 49.

A discharge pipe 51 opening into the reaction chamber 45 is connected to the temporary reservoir 49, and a pressure regulating valve 64 is provided in the discharge pipe 51. When the internal pressure of the reaction chamber 45 falls to a predetermined pressure or lower, the pressure regulating valve 64 opens to enable the reactant solution 48 from the temporary reservoir 49 to pass through the discharge pipe 51. The internal pressure of the temporary reservoir 49 is raised by the fed reactant solution 48 to be brought to a state higher than the pressure at which the pressure regulating valve opens (i.e., to a pressure exceeding the predetermined pressure value of the reaction chamber 45 for permitting the pressure regulating valve 64 to open). In accordance with the difference in internal pressure between the temporary reservoir 49 and the reaction chamber 45, the reactant solution 48 is fed to the reaction chamber 45 through the discharge pipe 51. As a result, the reactant solution 48 and the workpiece 46 contact to cause a hydrogen generation reaction in the reaction chamber 45.

The solution vessel 47 is a container as a bag-shaped member comprising a flexible film (e.g., polypropylene). Upon feeding of the reactant solution 48 to the temporary reservoir 49, and upon pressurization by hydrogen generated in the reaction chamber 45 (i.e. variable means), the volume of the solution vessel 47 is decreased. That is, as the reactant solution 48 is supplied from the solution vessel 47 to the reaction chamber 45, the volume of the solution vessel 47 is decreased, and the capacity of the reaction chamber 45 is increased correspondingly.

The fuel cell 43 will be described.
The fuel cell 43 is equipped with an anode chamber 58, and the anode chamber 58 constitutes a space contiguous to an anode compartment of a fuel cell unit cell 59. The anode compartment is a space for temporarily holding hydrogen to be consumed by an anode. The anode chamber 58 and the reaction chamber 45 are connected by a hydrogen conduit 44, and hydrogen generated in the reaction chamber 45 is supplied to the anode compartment of the anode chamber 58. Hydrogen supplied to the anode compartment is consumed by a fuel cell reaction in the anode. The amount of hydrogen consumption in the anode is determined by the output current of the fuel cell 43.

The actions of the above-mentioned fuel cell system 61 will be described.
When the fuel cell unit cell 59 is connected to a load, hydrogen inside the fuel cell system 41 and oxygen in air cause a fuel cell reaction to generate electricpower. Since power generation proceeds while consuming hydrogen, the internal pressure of the anode chamber 58, the hydrogen conduit 44, and the reaction chamber 45 falls. Here, the temporary reservoir 49 is subjected to atmospheric pressure. If the internal pressure becomes lower than atmospheric pressure, therefore, a differential pressure arises between the temporary reservoir 49 and the reaction chamber 45. As a result, the reactant solution 48 (aqueous malic acid solution) stored in the temporary reservoir 49 passes through the discharge pipe 51 and moves into the reaction chamber 45.

When the reactant solution 48 moves to the reaction chamber 45, the reactant solution 48 comes into contact with the workpiece 46 (sodium borohydride) to cause a hydrogen generation reaction. Hydrogen generated passes through the hydrogen conduit 44, and is supplied to the anode chamber 58. Because of hydrogen generation, the internal pressure of the reaction chamber 45, the hydrogen conduit 44, and the anode chamber 58 exceeds atmospheric pressure, with the result that the internal pressure of the reaction chamber 45 becomes higher than the pressure of the temporary reservoir 49. Thus, hydrogen is about to flow backward through the discharge pipe 51, but this backflow is prevented by the pressure regulating valve 64.

On the other hand, the solution vessel 47 is compressed under the internal pressure of the reaction chamber 45, whereby the reactant solution 48 stored within the solution vessel 47 is passed through the supply pipe 50 and the check valve 63, and supplied to the temporary reservoir 49.

Then, the rate of hydrogen generation lowers, and the rate of hydrogen consumption in the fuel cell 43 surpasses the rate of hydrogen generation, whereupon the internal pressure of the anode chamber 58, the hydrogen conduit 44, and the reaction chamber 45 begins to lower. When the internal pressure lowers, and a pressure difference occurs between the temporary reservoir 49 and the reaction chamber 45, the pressure regulating valve 64 opens to flow the reactant solution 48 from the temporary reservoir 49 to the solution vessel 47. As a result, the reactant solution 48 comes into contact with the workpiece 46 to cause a hydrogen generation reaction, raising the internal pressure of the reaction chamber 45 again.

In accordance with the repetition of the above procedure, hydrogen is generated, and hydrogen as a fuel is supplied to the anode chamber 58 of the fuel cell 43.

As the reactant solution 48 is supplied from the solution vessel 47 to the reaction chamber 45, the volume of the solution vessel 47 is decreased, and the capacity of the reaction chamber 45 is increased correspondingly. Hence, a dead space is eliminated, so that the region of hydrogen generation can be increased within a small space, making space saving possible without reducing the amount of hydrogen generation. Furthermore, the amount of hydrogen generation can be increased without an increase in space.

The above-mentioned fuel cell system 61 can be configured as the fuel cell system 61 equipped with the hydrogen generation equipment 62 which can generate a sufficient amount of hydrogen with a small volume.

### Industrial Applicability

The present invention can be utilized, for example, in the industrial fields of hydrogen generation equipment which decomposes metal hydrides to generate hydrogen, and fuel cell systems which consume, as a fuel, hydrogen generated by the hydrogen generation equipment.

## Claims

1. Hydrogen generation equipment, comprising:
a reactant vessel accommodating a hydrogen generation reactant whose hydrogen generation is accelerated when fed with a reactant fluid;
a fluid chamber disposed within the reactant vessel, accommodating the reactant fluid, and changeable in volume; and
variable means which changes the volume of the fluid chamber to change in a capacity, and
wherein as the fluid within the fluid chamber is supplied to the hydrogen generation reactant, the volume of the fluid chamber is decreased by the variable means to increase a capacity within the reactant vessel.

2. Hydrogen generation equipment, comprising:
a reactant vessel accommodating a hydrogen generation reactant whose hydrogen generation is accelerated when fed with a reactant fluid;
a fluid chamber disposed within the reactant vessel, accommodating the reactant fluid, and changeable in volume;
pressurizing means for pressurizing the fluid chamber;
discharge means for discharging hydrogen generated within the reactant vessel;
a fluid supply path for providing communication between the fluid chamber and the reactant vessel to permit flow of the reactant fluid; and
opening and closing means which is provided in the fluid supply path and opens a flow path for the fluid when a pressure of the reactant vessel becomes a predetermined value or less, and
wherein the fluid chamber is pressurized by the pressurizing means in such a manner as to be maintained at a pressure higher than the pressure which opens the opening and closing means, and the fluid chamber is pressurized such that the volume of the fluid chamber is decreased in accordance with a decrease in a capacity of the fluid chamber due to supply of the reactant fluid.

3. The hydrogen generation equipment according to claim 2, wherein
the fluid chamber is formed from a deformation permitting member, and the pressurizing means is pressing means for pressing the fluid chamber to decrease the volume of the fluid chamber and raise the pressure of the fluid chamber.

4. The hydrogen generation equipment according to claim 3, wherein
the deformation permitting member of the fluid chamber is a bag member, a plate material is provided at an end portion of the bag member, and the fluid chamber is pressed via the plate material, whereby the bag member is deformed to decrease the volume of the fluid chamber.

5. The hydrogen generation equipment according to claim 3, wherein
the deformation permitting member of the fluid chamber is a bellows member, a plate material is provided at an end portion of the bellows member, and the fluid chamber is pressed via the plate material, whereby the bellows member shrinks to decrease the volume of the fluid chamber.

6. The hydrogen generation equipment according to claim 3, wherein
the deformation permitting member of the fluid chamber is a cylinder having an end portion opened, and a piston plate provided on an open end side of the cylinder, and the piston plate is pressed, whereby a capacity of the cylinder is decreased to increase an open volume and decrease the volume of the fluid chamber.

7. The hydrogen generation equipment according to any one of claims 3 to 6, wherein
the pressing means is a compression spring.

8. The hydrogen generation equipment according to any one of claims 2 to 7, wherein
the opening and closing means is a pressure regulating valve designed such that in a constant pressure state where an internal pressure of the reactant vessel becomes lower than an internal pressure of the fluid chamber by a predetermined value, a valve body of the pressure regulating valve opens to permit the flow of the reactant fluid from the fluid chamber to the reactant vessel.

9. A fuel cell system, comprising:
a fuel cell having an anode compartment which is supplied with hydrogen; and
the hydrogen generation equipment of any one of claims 1 to 8,
wherein discharge means of the hydrogen generation equipment is connected to the anode compartment of the fuel cell.

10. The fuel cell system according to claim 9, wherein
the anode compartment and the reactant vessel form a closed space.
